# EUROPÄISCHE PATENTSCHRIFT

(11) **EP 2 994 652 B1**
(45) Veröffentlichungstag und Bekanntmachung des Hinweises auf die Patenterteilung: **07.12.2016**
(21) Anmeldenummer: 13736760.3
(22) Anmeldetag: 28.06.2013
(51) Int. Cl.: F16C 29/04, F16C 33/58

(54) **LINEARANTRIEB UND VERFAHREN ZU SEINER HERSTELLUNG**
LINEAR DRIVE AND METHOD FOR ITS PRODUCTION
MECANISME D'ENTRAINEMENT LINEAIRE ET PROCEDE DE SON FABRICATION

(43) Veröffentlichungstag der Anmeldung: 16.03.2016
(73) Patentinhaber: Festo AG & Co. KG, 73734 Esslingen (DE)
(72) Erfinder: ANGUE, Eric, 70806 Kornwestheim (DE); KOPP, Simone, 73734 Esslingen (DE); DIENER, Ulrich, 73732 Esslingen (DE)
(74) Vertreter: Patentanwälte Magenbauer & Kollegen Partnerschaft mbB
(86) Internationale Anmeldenummer: PCT/EP2013/001897
(87) Internationale Veröffentlichungsnummer: WO 2014/206429

(56) Entgegenhaltungen:
- EP-A1- 2 133 005
- DE-A1- 2 540 656
- DE-A1-102011 016 282
- US-A- 4 701 058

## Beschreibung

Die Erfindung betrifft einen Linearantrieb, mit einer ein Antriebsgehäuse aufweisenden Antriebseinheit und einem außen an dem Antriebsgehäuse angeordneten und diesbezüglich zur Ausführung einer in der Achsrichtung einer Längsachse orientierten Hubbewegung linear verschiebbar geführten Abtriebsschlitten, wobei der Abtriebsschlitten über einen einstückigen Schlittenkörper verfügt, der einen im Querschnitt U-förmigen Führungsabschnitt bestehend aus einem plattenförmigen Zentralabschnitt und an entgegengesetzten Längsseiten daran angeordneten, in Richtung zum Antriebsgehäuse nach unten ragenden Führungsschenkeln sowie einen an einer Stirnseite des Zent- ralabschnittes angeordneten und ebenfalls nach unten ragenden Antriebsschenkel aufweist, wobei die Führungsschenkel zur Linearführung des Abtriebsschlittens dienen und der Antriebsschenkel mit mindestens einem aus dem Antriebsgehäuse herausragenden Antriebsabschnitt der Antriebseinheit antriebsmäßig gekoppelt ist.

Ferner betrifft die Erfindung ein Verfahren zur Herstellung eines solchen Linearantriebes.

Ein aus der DE 33 30 933 A1 bekannter Linearantrieb der eingangs genannten Art verfügt über einen an einem Antriebsgehäuse einer Antriebseinheit linear verschiebbar gelagerten Abtriebsschlitten, der durch die Antriebseinheit zu einer linearen Hubbewegung antreibbar ist. Der Abtriebsschlitten enthält einen einstückigen Schlittenkörper und empfängt die zur Ausführung der Hubbewegung erforderliche Stellkraft von einer aus dem Antriebsgehäuse herausragenden Kolbenstange, die an einem nach unten ragenden Antriebsschenkel des Schlittenkörpers angreift. Der Antriebsschenkel befindet sich an einer Stirnseite eines plattenförmigen Zentralabschnittes des Schlittenkörpers, der zugleich auch Bestandteil eines Führungsabschnittes ist und zu diesem Zweck über zwei längsseits angeordnete, nach unten ragende Führungsschenkel verfügt, die zur Linearführung des Abtriebsschlittens unter Vermittlung einer Wälzlagereinrichtung mit dem Antriebsgehäuse kooperieren. Aus der zeichnerischen Darstellung in der DE 33 30 933 A1 ist zu schließen, dass der einstückige Schlittenkörper durch spanende Bearbeitung aus einem Materialrohling hergestellt wurde, was sehr zeitaufwendig ist, sodass die Herstellung des bekannten Linearantriebes mit hohen Kosten verbunden sein dürfte.

Aus der DE 10 2011 016 282 A1 ist ein Linearantrieb bekannt, dessen Abtriebsschlitten einen mehrteiligen Schlittenkörper aufweist, der über einen als Gleittisch bezeichneten und durch Pressen hergestellten einstückigen Führungsabschnitt verfügt und außerdem eine separat daran angebrachte Endplatte aufweist, die zur Kraftübertragung mit mindestens einer Kolbenstange verbunden ist. Durch die Pressformung des Führungsabschnittes können die Herstellungskosten dieses Linearantriebes reduziert werden. Gleichwohl erfordert der Zusammenbau des Abtriebsschlittens präzise Arbeitsvorgänge, um einen reibungsarmen Betrieb zu gewährleisten, was sich nachteilig auf die Herstellungskosten auswirkt.

Der Erfindung liegt die Aufgabe zugrunde, Maßnahmen zu treffen, die eine besonders einfache und kostengünstige Herstellung eines Linearantriebes ermöglichen.

Zur Lösung dieser Aufgabe ist bei einem Linearantrieb der eingangs genannten Art erfindungsgemäß vorgesehen, dass der einstückige Schlittenkörper ein metallisches Blechbiegeteil ist, wobei sowohl die Führungsschenkel als auch der Antriebsschenkel von bezüglich des Zentralabschnittes umgebogenen Abschnitten des Schlittenkörpers gebildet sind.

Die Aufgabe wird darüber hinaus in Verbindung mit den Verfahrensmerkmalen der eingangs genannten Art dadurch gelöst, dass der einstückige Schlittenkörper auf der Grundlage eines zuvor randseitig entsprechend konturierten plattenförmigen Blechteilrohlings durch Biegeumformung als metallisches Blechbiegeteil hergestellt wird.

Die Ausgestaltung des Schlittenkörpers als einstückiges Blechbiegeteil, das außer dem Zentralabschnitt zumindest auch noch die beiden Führungsschenkel und den Antriebsschenkel beinhaltet, eröffnet die Möglichkeit zu einer technologisch einfachen und kostengünstigen Herstellung des Abtriebsschlittens. Einerseits werden aufwendige spanende Bearbeitungsvorgänge eingespart und andererseits erübrigen sich Fügevorgänge, die mit einem nicht unbeträchtlichen Zeitaufwand verbunden sind, wenn eine angemessene Präzision gewährleistet werden soll. Zur Herstellung des Schlittenkörpers wird bevorzugt auf einen plattenförmigen Blechteilrohling zurückgegriffen, dessen Außenkontur hinsichtlich der angestrebten Endgestalt des Schlittenkörpers konturiert und insbesondere entsprechend zugeschnitten wird - beispielsweise durch Laserschneiden oder durch Stanzen - und der anschließend unter Verwendung geeigneter Biegewerkzeuge so umgeformt bzw. gebogen wird, dass sich der Schlittenkörper in der angestrebten Endgestalt mit einem plattenförmigen Zentralabschnitt und den von dem Zentralabschnitt wegragenden Schenkeln einschließlich zumindest des Antriebsschenkels und der beiden Führungsschenkel ergibt.

Vorteilhafte Weiterbildungen der Erfindung gehen aus den Unteransprüchen hervor.

Zweckmäßigerweise sind die beiden Führungsschenkel jeweils mit mindestens einer linearen Führungsnut ausgestattet, in die mindestens ein den Abtriebsschlitten bezüglich des Antriebsgehäuses abstützendes und eine Linearführung bewirkendes Führungselement eingreift. In bevorzugter Ausgestaltung sind jeder Führungsnut mehrere Führungselemente zugeordnet, bei denen es sich insbesondere um Wälzelemente handelt, beispielsweise in der Form von Kugeln, Rollen oder Nadeln. Auf diese Weise kann eine besonders leichtgängige und gleichzeitig sehr präzise und hochbelastbare Linearführung gewährleistet werden.

Unter Berücksichtigung der Ausgestaltung des Schlittenkörpers als Blechbiegeteil ist es vorteilhaft, wenn die beiden Führungsschenkel in sich unmittelbar so gebogen sind, dass sie über eine entsprechend nichtlineare Querschnittskontur verfügen, die die zugeordnete Führungsnut definiert. Insbesondere kann jeder Führungsschenkel im Querschnitt gesehen eine abgekröpfte und dabei abgerundete Formgebung haben, durch die die zugeordnete Führungsnut definiert wird.

Als besonders vorteilhaft wird es angesehen, wenn die mindestens eine Führungsnut an der vom jeweils anderen Führungsschenkel abgewandten Außenseite des betreffenden Führungsschenkels angeordnet ist. Auf diese Weise können eventuell erforderliche mechanische Nachbearbeitungen der Oberfläche der Führungsnuten bequem nach der Biegeformgebung des Schlittenkörpers ausgeführt werden, weil die Führungsnuten über ihre gesamte Länge hinweg gut zugänglich sind.

Die Biegevorgänge sind besonders einfach durchführbar, wenn der Antriebsschenkel von beiden Führungsschenkeln randseitig getrennt ist und die einzige Verbindung zwischen den diversen Schenkeln ausschließlich durch den Zentralabschnitt realisiert ist. Nach der Fertigstellung des Schlittenkörpers äußert sich dies insbesondere durch einen an der dem Zentralabschnitt entgegengesetzten Unterseite offenen Trennschlitz zwischen dem Antriebsschenkel und jedem Führungsschenkel. Bevorzugt sind die Schenkel so gestaltet, dass sie im Bereich des Trennschlitzes nicht aneinander anliegen, sondern einen zumindest geringfügigen Abstand zueinander aufweisen, sodass sich zwischen ihnen ein Freiraum erstreckt. Ein solcher Freiraum berücksichtigt insbesondere auch den Umstand, dass das Metall nach dem Biegevorgang aufgrund seiner Elastizität meist geringfügig zurückfedert, sodass der Freiraum nutzbar ist, um die Schenkel bei der Formgebung mehr als notwendig abzubiegen, sodass sie sich anschließend in die gewünschte Sollposition elastisch zurückverformen.

Der Umformvorgang wird im Übrigen auch begünstigt, wenn der Zentralabschnitt in seinen beiden Eckbereichen, in denen der Antriebsschenkel zu den beiden Führungsschenkeln benachbart ist, jeweils eine nach Art einer Ausklinkung gestaltete Aussparung aufweist. Diese Aussparung ist sowohl zur Längsseite als auch zur Stirnseite des Zentralabschnittes offen.

In einer bevorzugten Gestaltung ist der Antriebsschenkel in sich U-förmig gebogen, sodass er einen ausgehend vom Zentralabschnitt des Schlittenkörpers nach unten ragenden ersten Schenkelabschnitt aufweist, an den sich ein um etwa 180° zurückgebogener und wieder nach oben ragender zweiter Schenkelabschnitt anschließt. Auf diese Weise kann ein Antriebsschenkel mit besonders hoher Stabilität generiert werden. Es ist zweckmäßig, die beiden Schenkelabschnitte so zu biegen, dass der zweite Schenkelabschnitt einen näher bei dem Führungsabschnitt liegenden inneren Schenkelabschnitt bildet und der äußere Abschluss des Schlittenkörpers durch den nach unten ragenden ersten Schenkelabschnitt definiert wird, der als äußerer Schenkelabschnitt bezeichnet werden kann. Durch diese Gestaltung ergibt sich auch eine nach außen hin geschlossene Oberfläche mit verringertem Risiko des Eintrittes von Verunreinigungen zwischen die beiden Schenkelabschnitte. Prinzipiell kann die Umbiegung aber auch so gestaltet sein, dass der nach oben ragende zweite Schenkelabschnitt außen liegt.

Die U-förmige Ausgestaltung des Antriebsschenkels kann auch in vorteilhafter Weise zur mechanischen Ankopplung des Antriebsabschnittes der Antriebseinheit genutzt werden, der in den Abtriebsschlitten die zum Hervorrufen der Hubbewegung erforderliche Antriebskraft einleitet. In diesem Zusammenhang ist insbesondere vorgesehen, dass die beiden Schenkelabschnitte jeweils von einem Befestigungsloch durchsetzt sind, wobei diese Befestigungslöcher koaxial zueinander ausgerichtet sind, wobei das in dem äußeren Schenkelabschnitt ausgebildete äußere Befestigungsloch einen größeren Durchmesser hat als das in dem inneren Schenkelabschnitt ausgebildete innere Befestigungsloch. Durch beide Befestigungslöcher erstreckt sich von außen her eine Befestigungsschraube hindurch, deren Schraubenkopf innerhalb des äußeren Befestigungsloches liegt und sich am inneren Schenkelabschnitt abstützt. Der Abstand zwischen den beiden Schenkelabschnitten ist dabei insbesondere so gewählt, dass der Schraubenkopf nicht über die Außenfläche des äußeren Schenkelabschnittes hinausragt, sondern innerhalb des äußeren Befestigungsloches endet und dabei vorzugsweise flächenbündig mit der Außenfläche des äußeren Schenkelabschnittes ausgerichtet ist.

Eine weitere bevorzugte Ausgestaltung des Linearantriebes sieht vor, dass der einstückige Schlittenkörper an der dem Antriebsschenkel entgegengesetzten Stirnseite des Zentralabschnittes über einen weiteren, ausgehend vom Zentralabschnitt in die gleiche Richtung wie die anderen Schenkel nach unten ragenden Schenkel aufweist, der aufgrund seines Verwendungszwecks als Anschlagschenkel bezeichnet wird und der ebenfalls in Form eines bezüglich des Zentralabschnittes umgebogenen Abschnittes des Schlittenkörpers realisiert ist. Mithin kann der Anschlagschenkel in der gleichen Weise wie der Antriebsschenkel und die beiden Führungsschenkel durch einen Biegevorgang bei der Realisierung des Blechbiegeteils erzeugt werden. Der Anschlagschenkel ist zur Hubbegrenzung des Abtriebsschlittens verwendbar und kann insbesondere direkt oder indirekt mit einem bezüglich des Antriebsgehäuses ortsfest angeordneten Gegenanschlag kooperieren.

Hinsichtlich des Vorhandenseins von Trennschlitzen und Aussparungen zwischen dem Anschlagschenkel und jedem Führungsschenkel gelten die gleichen Hinweise, wie sie weiter oben zu den entsprechenden Maßnahmen in Verbindung mit den Führungsschenkeln und dem Antriebsschenkel erläutert wurden.

Vorzugsweise trägt der Anschlagschenkel ein Hubbegrenzungselement, das zur Hubbegrenzung mit einem an dem Antriebsgehäuse angeordneten Gegenanschlag zusammenwirken kann. Das Hubbegrenzungselement kann über Aufpralldämpfungsmittel verfügen, um den Aufprall am Gegenanschlag zu dämpfen, wobei diese Aufpralldämpfungsmittel beispielsweise ein elastisches Pufferelement aufweisen können oder aber auch als fluidischer Stoßdämpfer realisiert sein können.

Der Anschlagschenkel ist vorzugsweise U-förmig gebogen, wie dies weiter oben in Verbindung mit dem Antriebsschenkel bereits erläutert wurde, wobei hier die gleichen Vorteile wie bezüglich des Antriebsschenkels gelten.

In Verbindung mit der Fixierung eines Hubbegrenzungselementes hat die U-förmige Gestaltung des Anschlagschenkels besondere Vorteile. So können die beiden Schenkelabschnitte des Antriebsschenkels jeweils von einem ein Innengewinde aufweisenden Befestigungs-Gewindeloch durchsetzt sein, wobei diese Befestigungs-Gewindelöcher miteinander fluchten und in die beiden Befestigungs-Gewindelöcher ein zur Hubbegrenzung des Abtriebsschlittens dienendes Hubbegrenzungselement mit einem Außengewinde einschraubbar oder eingeschraubt ist, sodass es sich gleichzeitig durch beide Befestigungs-Gewindelöcher hindurch erstreckt. Mindestens ein zusätzlich vorhandenes Spreizelement gestattet es, die beiden Schenkelabschnitte durch entsprechende Krafteinleitung derart geringfügig auseinanderzuspreizen, dass das Außengewinde des Hubbegrenzungselementes mit den Innengewinden der beiden Befestigungs-Gewindelöcher verspannt wird, sodass sich eine kraftschlüssige Verdrehsicherung für das Hubbegrenzungselement ergibt, die ein unerwünschtes Verstellen der eingestellten Anschlagposition verhindert.

Bei dem Spreizelement handelt es sich insbesondere um eine Spreizschraube, die in ein bezüglich der Befestigungslöcher gesondertes Gewindeloch des einen Schenkelabschnittes einschraubbar ist und die mit einem gegenüberliegenden Flächenabschnitt des anderen Schenkelabschnittes verspannbar ist, um die gewünschte Spreizkraft zu generieren.

Der Schlittenkörper besteht vorzugsweise aus einem Stahlblech. Eine besondere Korrosionsbeständigkeit ergibt sich bei Verwendung eines Edelstahlbleches.

Nachfolgend wird die Erfindung anhand der beiliegenden Zeichnung näher erläutert. In dieser zeigen:
- Figur 1: eine bevorzugte erste Ausgestaltung des erfindungsgemäßen Linearantriebes in einer isometrischen Darstellung mit Blick auf die Seite des Antriebsschenkels,

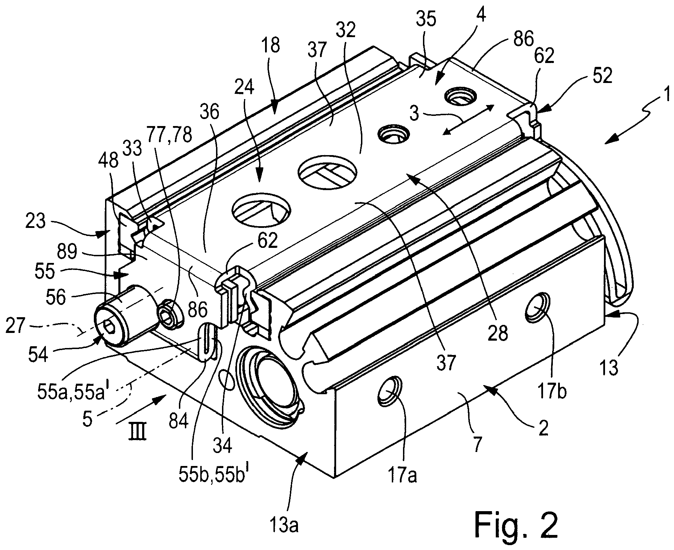

- Figur 2: eine weitere isometrische Darstellung des Linearantriebes mit bezüglich Figur 1 entgegengesetzter Blickrichtung,
- Figur 3: eine Stirnansicht des Linearantriebes mit Blickrichtung gemäß Pfeil III aus Figur 2,
- Figur 4: einen Querschnitt durch den Linearantrieb gemäß Schnittlinie IV-IV aus Figur 1,
- Figur 5: einen Längsschnitt des Linearantriebes gemäß Schnittlinie V-V aus Figur 1,

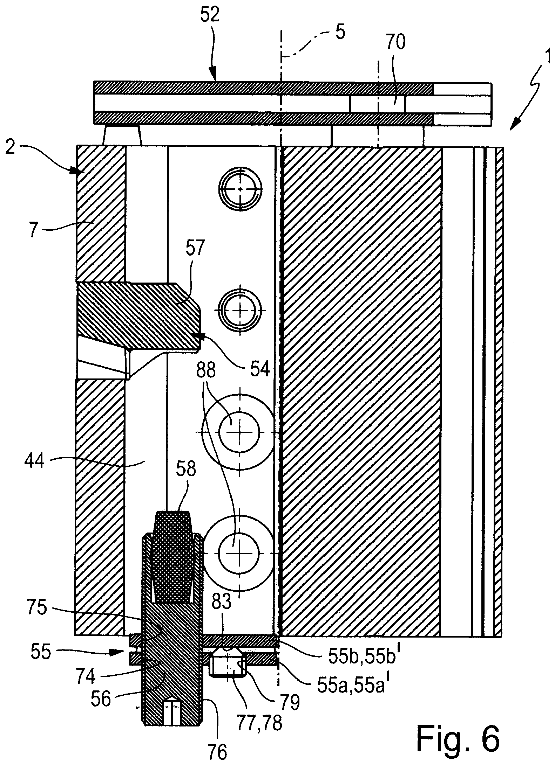

- Figur 6: einen weiteren Längsschnitt des Linearantriebes gemäß der abgestuften Schnittlinie VI-VI aus Figur 3,
- Figur 7: eine perspektivische Einzeldarstellung des als einstückiges Blechbiegeteil realisierten Schlittenkörpers des Linearantriebes,
- Figur 8: den Schlittenkörper aus Figur 7 in einer isometrischen Unteransicht, und
- Figur 9: eine Draufsicht des Schlittenkörpers mit Blickrichtung gemäß Pfeil IX aus Figur 7, wobei durch strichpunktierte Linien die Außenkontur eines der Biegeumformung zugrundeliegenden Blechteilrohlings angedeutet ist und durch strichpunktierte Pfeile der Biegevorgang schematisch angedeutet ist.

Aus der Zeichnung ist ein insgesamt mit Bezugsziffer 1 bezeichneter Linearantrieb ersichtlich, der eine Antriebseinheit 2 und einen diesbezüglich zur Ausführung einer linearen Hubbewegung 3 linear verschiebbar gelagerten Abtriebsschlitten 4 aufweist.

Der Linearantrieb 1 hat eine Längsachse 5, wobei die Hubbewegung 3 in der Achsrichtung dieser Längsachse 5 orientiert ist. Der Abtriebsschlitten 4 kann sich dabei bezüglich der Antriebseinheit 2 in einander entgegengesetzten Bewegungsrichtungen bewegen.

Der Abtriebsschlitten 4 ist außen an der Antriebseinheit 2 angeordnet. Insgesamt mit Bezugsziffer 6 bezeichnete Linearführungsmittel sorgen dafür, dass der Abtriebsschlitten 4 bezüglich der Antriebseinheit 2 rechtwinkelig zur Längsachse 5 abgestützt und zur Ausführung der Hubbewegung 3 linear verschiebbar geführt ist.

Die Antriebseinheit 2 enthält ein als Antriebsgehäuse 7 bezeichnetes Gehäuse und zumindest teilweise im Innern des Antriebsgehäuses 7 angeordnete Antriebsmittel 8, die mit dem Abtriebsschlitten 4 zur Übertragung von Antriebskräften gekoppelt sind. Ein Antriebsabschnitt 12 der Antriebsmittel 8, der eine durch einen Doppelpfeil angedeutete Antriebsbewegung 14 in der Achsrichtung der Längsachse 5 ausführen kann, ragt an einer vorderen Stirnseite 13 aus dem Antriebsgehäuse 7 heraus und ist außerhalb des Antriebsgehäuses 7 mit dem Abtriebsschlitten 4 antriebsmäßig verbunden.

Bevorzugt ist der Antriebsabschnitt 12 stangenförmig ausgebildet. Er könnte daher auch als Antriebsstange bezeichnet werden. Exemplarisch ist er von einer Kolbenstange gebildet, die mit einem durch Fluidbeaufschlagung linear bewegbaren Antriebskolben 15 verbunden ist, der in einer im Innern des Antriebsgehäuses 7 ausgebildeten Antriebskammer 16 linear verschiebbar aufgenommen ist.

Der Antriebskolben 15 unterteilt die Antriebskammer 16 in zwei Teilkammern 16a, 16b, die jeweils mit einem von zwei Steuerkanälen 17a, 17b kommunizieren, die zu einer Außenfläche des Antriebsgehäuses 7 ausmünden. Durch die Steuerkanäle 17a, 17b hindurch ist eine gesteuerte Fluidbeaufschlagung der beiden Teilkammern 16a, 16b möglich, um eine Linearbewegung des Antriebskolbens 15 hervorzurufen, aus der die Antriebsbewegung 14 des Antriebsabschnittes 12 resultiert.

Ersichtlich sind beim Ausführungsbeispiel die Antriebsmittel 8 vom durch Fluidkraft betätigbaren Typ. Hiervon abweichend können die Antriebsmittel 8 aber auch elektrisch oder kombiniert elektrisch und durch Fluidkraft betätigbar ausgeführt sein. Beispielsweise kann der Antriebsabschnitt 12 eine Antriebsstange sein, die über einen Spindeltrieb elektrisch antreibbar ist.

Der Abtriebsschlitten 4 erstreckt sich entlang einer Oberseite 18 des Antriebsgehäuses 7. Zumindest in einer aus den Zeichnungen ersichtlichen eingefahrenen Grundstellung erstreckt sich der Abtriebsschlitten 4 bevorzugt über die gesamte Länge des Antriebsgehäuses 7 hinweg.

Der Abtriebsschlitten 4 hat eine der vorderen Stirnseite 13 des Antriebsgehäuses 7 zugeordnete Vorderseite 22 und eine diesbezüglich in Achsrichtung der Längsachse 5 entgegengesetzt orientierte Rückseite 23. Die Kraftübertragung vom Antriebsabschnitt 12 in den Abtriebsschlitten 4 erfolgt im Bereich der Vorderseite 22.

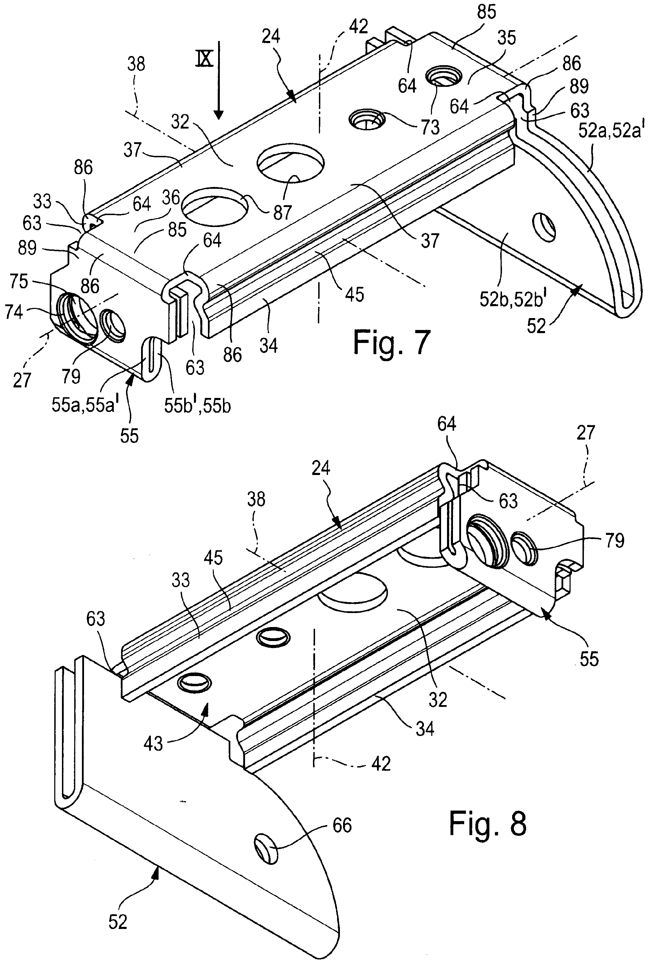

Hauptbestandteil des Abtriebsschlittens 4 ist ein einstückig aus Metall und insbesondere aus Stahl ausgebildeter Schlittenkörper 24. Dieser Schlittenkörper 24 ist in den Figuren 7 bis 9 isoliert dargestellt. Konkret ist der Schlittenkörper 24 ein Blechkörper, der aus einem Metallblech und insbesondere aus einem Stahlblech besteht. Ein besonderer Vorteil resultiert daraus, dass es sich bei dem Schlittenkörper 24 um ein Blechbiegeteil handelt, also um einen Körper, der durch Biegeumformung aus einem zuvor bereitgestellten Blechteilrohling erzeugt wurde.

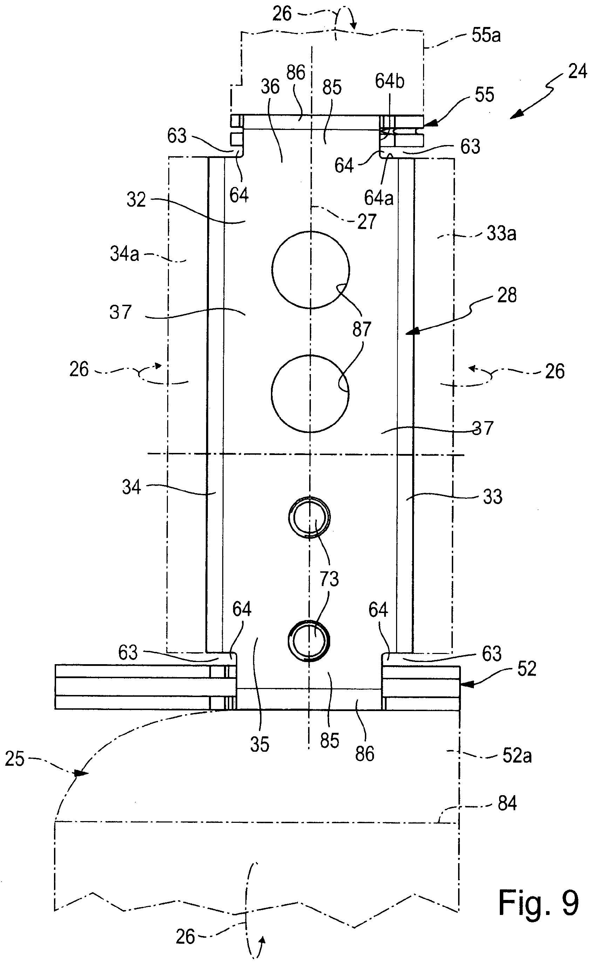

In Figur 9 ist strichpunktiert ein als Ausgangsprodukt für den Schlittenkörper 24 zugrundeliegender Blechteilrohling 25 angedeutet. Dieser wird durch Biegen mittels eines oder mehreren geeigneten Biegewerkzeugen in die gewünschte Endform des Schlittenkörpers 24 umgeformt, was durch verschiedene Pfeile 26 angedeutet ist. Vor dem Biege-Umformvorgang wird der Blechteilrohling randseitig entsprechend konturiert, wobei er insbesondere zugeschnitten wird, was wegen der Flexibilität insbesondere durch Laserschneiden geschieht, prinzipiell aber auch durch einen Stanzvorgang durchführbar ist.

Der Schlittenkörper 24 hat eine Längserstreckung mit einer Längsachse 27, die die gleiche Ausrichtung hat wie die Längsachse 5 des Linearantriebes 1.

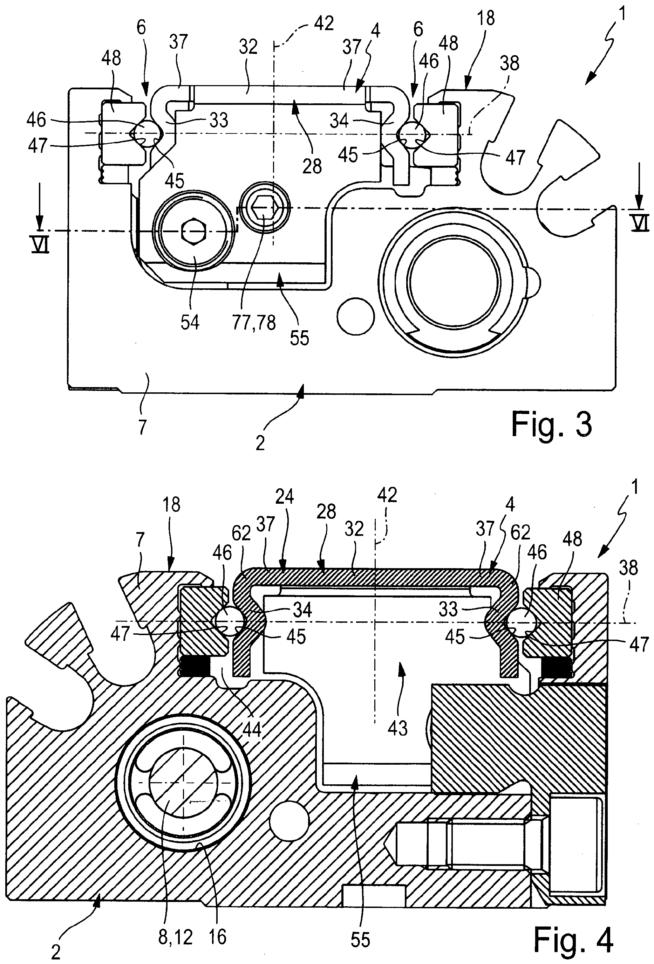

Der Schlittenkörper 24 weist einen sich in der Achsrichtung der Längsachse 27 erstreckenden Führungsabschnitt 28 auf, der über einen insbesondere aus Figuren 3 und 4 ersichtlichen U-förmigen Querschnitt verfügt. Dieser Führungsabschnitt 28 besteht aus einem plattenförmigen Zentralabschnitt 32 und zwei einstückig damit verbundenen Führungsschenkeln 33, 34. Der Zentralabschnitt 32 hat eine in Achsrichtung der Längsachse 27 orientierte vordere Stirnseite 35 und eine diesbezüglich entgegengesetzt orientierte rückwärtige Stirnseite 36. Er verfügt außerdem über zwei rechtwinkelig dazu orientierte Längsseiten 37, wobei an jeder dieser Längsseiten 37 einer der beiden Führungsschenkel 33, 34 einstückig angeformt ist.

Der Schlittenkörper 24 hat eine zu der Längsachse 27 rechtwinkelige Querachse 38. Die beiden Führungsschenkel 33, 34 sind in Achsrichtung der Querachse 38 mit Abstand zueinander angeordnet, wobei sie sich jeweils in der Achsrichtung der Längsachse 27 erstrecken.

Der Schlittenkörper 24 hat außerdem eine zur Längsachse 27 und zur Querachse 38 rechtwinkelige Hochachse 42. Er ist mit einer in Achsrichtung der Hochachse 42 orientierten Unterseite voraus an die Oberseite 18 des Antriebsgehäuses 7 angesetzt, wobei der Führungsabschnitt 28 zweckmäßigerweise versenkt in einer nutartigen Führungsausnehmung 44 des Antriebsgehäuses 7 aufgenommen ist, die sich in Achsrichtung der Längsachse 5 über die gesamte Länge des Antriebsgehäuses 7 erstreckt und sowohl zur vorderen Stirnseite 13 als auch zur diesbezüglich entgegengesetzten hinteren Stirnseite 13a des Antriebsgehäuses 7 offen ist.

Die Führungsschenkel 33, 34 ragen ausgehend vom Zentralabschnitt 32 in die gleiche Achsrichtung der Hochachse 42 und dabei nach unten in Richtung zum Antriebsgehäuse 7. Mit anderen Worten ist die U-Öffnung des im Querschnitt U-förmigen Führungsabschnittes 28 nach unten orientiert und der Oberseite 18 des Antriebsgehäuses 7 zugewandt.

Die Führungsschenkel 33, 34 sind bevorzugt schienen- oder leistenförmig ausgebildet, wobei ihre Längserstreckung in der Achsrichtung der Längsachse 27 verläuft.

Jeder Führungsschenkel 33, 34 ist ein Bestandteil der Linearführungsmittel 6 und weist an der vom jeweils anderen Führungsschenkel 34, 33 in Achsrichtung der Querachse 38 abgewandten Außenseite mindestens eine und bevorzugt genau eine Führungsnut 45 auf. Die Führungsnut 45 hat eine lineare Erstreckung in der Achsrichtung der Längsachse 27, wobei sie bevorzugt konkav abgerundet konturiert ist.

In jede Führungsnut 45 greifen mindestens ein und bevorzugt mehrere Führungselemente 46 ein, die sich andererseits quer zu der Längsachse 27 am Antriebsgehäuse 7 abstützen. Exemplarisch ist jeder Führungsnut 45 eine Mehrzahl von aneinandergereihten Führungselementen 46 zugeordnet, die in der Führungsnut 45 dieser entlang gleiten oder abrollen können, je nach Ausgestaltung der Führungselemente 46. Bevorzugt sind die Führungselemente 46 als Wälzelemente ausgebildet, insbesondere wie abgebildet als Kugelkörper.

Die Führungselemente 46 gehören auch zu den Linearführungsmitteln 6.

Zweckmäßigerweise liegt jeder Führungsnut 45 des Führungsabschnittes 28 eine bezüglich des Antriebsgehäuses 7 ortsfeste Gegenführungsnut 47 gegenüber, die mit der gegenüberliegenden Führungsnut 45 einen Führungskanal definiert, in dem sich jeweils eine Mehrzahl von Führungselementen 46 befindet. Die Gegenführungsnuten 47 sind entweder einstückig am Antriebsgehäuse 7 ausgebildet oder sind vorzugsweise jeweils von einer separaten Führungsschiene 48 gebildet, die am Antriebsgehäuse 7 befestigt ist. Letzteres ist beim Ausführungsbeispiel der Fall.

Wenn der Abtriebsschlitten 4 eine Hubbewegung 3 ausführt, wandern die Führungselemente 46 entlang den erwähnten Führungskanälen, wobei sie sich in den Führungsnuten 45 am Schlittenkörper 24 abwälzen. Auf diese Weise ist eine leichtgängige Linearbewegung des Abtriebsschlittens 4 gewährleistet.

Prinzipiell wäre es möglich, die Führungsnuten 45 ausschließlich durch spanende Bearbeitung in die Führungsschenkel 33, 34 einzubringen. Es ist jedoch wesentlich vorteilhafter, die Führungsnuten 45 wie beim Ausführungsbeispiel durch eine entsprechend konturierte Formgebung der Führungsschenkel 33, 34 zu realisieren, die bei der Biegeumformung des Schlittenkörpers 24 beziehungsweise des Blechteilrohlings 25 stattfindet. Mit anderen Worten sind die beiden Führungsschenkel 33, 34 in sich so gebogen, dass sie jeweils eine die zugeordnete mindestens eine Führungsnut 45 bildende Querschnittskontur haben. Daraus ergibt sich insbesondere eine aus Figuren 3 und 4 gut ersichtliche abgekröpfte Querschnittskontur der Führungsschenkel 33, 34, wobei die Führungsschenkel 33, 34 an der der außen angeordneten Führungsnut 45 entgegengesetzten Innenseite eine im Querschnitt wulstartige Erhebung haben. Die Materialdicke der Führungsschenkel 33, 34 ist zweckmäßigerweise an jeder Stelle gleichgroß und ist zweckmäßigerweise auch gleich wie die Materialdicke des sich anschließenden plattenförmigen Zentralabschnittes 32.

Wenn eine besonders hohe Führungspräzision gewünscht ist, können die Führungsnuten 45 nach dem Formgebungsvorgang noch nachgeschliffen und/oder poliert werden. Der Materialabtrag ist dabei allerdings sehr gering, weil die Führungsnuten 45 ihre Grundform bereits durch den Biegevorgang erhalten haben.

Prinzipiell könnten die Führungsnuten 45 auch an den einander zugewandten Innenflächen der Führungsschenkel 33, 34 ausgebildet sein. Insbesondere wenn eine schleifende Nachbearbeitung vorgenommen werden soll, erleichtert jedoch die Anordnung der Führungsnuten 45 an den Außenflächen der Führungsschenkel 33, 34 die Zugänglichkeit.

Für die antriebsmäßige Kopplung des Abtriebsschlittens 4 mit dem Antriebsabschnitt 12 weist der einstückige Schlittenkörper 24 im Bereich der Vorderseite 22 einen an der vorderen Stirnseite 35 des Zentralabschnittes 32 einstückig angeformten und wie die beiden Führungsschenkel 33, 34 nach unten ragenden Antriebsschenkel 52 auf. Der Antriebsschenkel 52 ragt zweckmäßigerweise vor die vordere Stirnseite 13 des Antriebsgehäuses 7. Dabei ragt er auch vor die Stirnseite des aus dem Antriebsgehäuse 7 herausragenden Antriebsabschnittes 12. Dieser Antriebsabschnitt 12 ist mit dem Antriebsschenkel 52 an einer an dem Antriebsschenkel 52 ausgebildeten Befestigungsschnittstelle 53 befestigt, sodass bei beiden Bewegungsrichtungen der Antriebsbewegung 14 eine Antriebskraft vom Antriebsabschnitt 12 auf den Schlittenkörper 24 übertragen werden kann. Auf diese Weise ist die Hubbewegung 3 des Abtriebsschlittens 4 erzeugbar.

Wie die beiden Führungsschenkel 33, 34 ist auch der Antriebsschenkel 52 von einem durch eine Biegeumformung bezüglich des Zentralabschnittes 32 umgebogenen Abschnitt des Schlittenkörpers 24 gebildet. Die zur Bildung der Führungsschenkel 33, 34 und des Antriebsschenkels 52 umgebogenen Abschnitte des Blechteilrohlings 25 sind in Figur 9 durch Bezugsziffern 33a, 34a und 52a angedeutet.

Vorzugsweise ist der Linearantrieb 1 mit einer sich aus mehreren Komponenten zusammensetzenden Hubbegrenzungseinrichtung 54 ausgestattet, die dazu dient, die Hubbewegung beim Ausfahren des Abtriebsschlittens 4 zu begrenzen und eine ausgefahrene Hubposition des Abtriebsschlittens 4 zu definieren.

Die Hubbegrenzungsmittel 54 enthalten zweckmäßigerweise einen als Bestandteil des einstückigen Schlittenkörpers ausgebildeten Anschlagschenkel 55, der an der dem Antriebsschenkel 52 axial entgegengesetzten rückwärtigen Stirnseite 36 einstückig an dem Zentralabschnitt 32 angeordnet ist und wie der Antriebsschenkel 52 und die beiden Führungsschenkel 33, 34 ausgehend von dem Zentralabschnitt 52 nach unten ragt. Der Anschlagschenkel 55 ist durch Umbiegen eines in Figur 9 mit 55a bezeichneten Abschnittes des Blechteilrohlings 25 erzeugt und ist mithin von einem bezüglich des Zentralabschnittes 32 umgebogenen Abschnitt des Schlittenkörpers 24 gebildet.

Zweckmäßigerweise trägt der Anschlagschenkel 55 ein Hubbegrenzungselement 56, das zur Hubbegrenzung und Vorgabe der ausgefahrenen Hubposition mit einem an dem Antriebsgehäuse 7 angeordneten Gegenanschlag 57 zusammenwirken kann. Der Gegenanschlag 57 ragt in den Verfahrweg des Hubbegrenzungselementes 56, sodass Letzteres auf den Gegenanschlag 57 auftrifft, wenn die vorgegebene ausgefahrene Hubposition des Abtriebsschlittens 4 erreicht ist.

Das Hubbegrenzungselement 56 ist zweckmäßigerweise mit Aufpralldämpfungsmitteln 58 ausgestattet, die die Intensität des Aufpralls auf dem Gegenanschlag 57 dämpfen. Exemplarisch bestehen diese Aufpralldämpfungsmittel 58 aus einem Gummipuffer. Alternativ könnten sie aber auch als fluidischer Stoßdämpfer verwirklicht sein.

Sämtliche Schenkel 33, 34, 52, 55 erstrecken sich zweckmäßigerweise in einer zur Längsachse 27 des Schlittenkörpers 24 rechtwinkeligen Ebene. Es ist ferner vorteilhaft, wenn jeder der Schenkel 33, 34, 52, 55 derart bezüglich des Zentralabschnittes 32 abgebogen ist, dass sich ein abgerundeter Übergangsbereich 62 einstellt.

Jeder der abgebogenen Schenkel 33, 34, 52, 55 ist bevorzugt ausschließlich mit dem Zentralabschnitt 32 direkt verbunden, und zwar exemplarisch durch einen der abgerundeten Übergangsbereiche 62. Zwischen den diversen Schenkeln 33, 34, 52, 55 selbst liegt zweckmäßigerweise keine materielle Verbindung vor. Dies äußert sich darin, dass jeder Führungsschenkel 33, 34 im Bereich seiner Seitenränder sowohl vom Antriebsschenkel 52 als auch vom Anschlagschenkel 55 durch einen Trennschlitz 63 getrennt ist. Die Trennschlitze 63 sind insbesondere so gestaltet, dass sie nach unten hin, also an der dem Zentralabschnitt 32 entgegengesetzten Seite, offen sind. Vorzugsweise definieren die Trennschlitze 63 zwischen den aneinander angrenzenden Schenkeln 33, 34, 52, 55 jeweils einen bevorzugt spaltförmigen Freiraum.

Es ist weiterhin von Vorteil, wenn der Zentralabschnitt 32, der bevorzugt rechteckig konturiert ist, in seinen Eckbereichen, in denen jeweils einer der Führungsschenkel 33, 34 auf entweder den Antriebsschenkel 52 oder den Anschlagschenkel 55 trifft, eine nach Art einer Ausklinkung gestaltete Aussparung 64 aufweist.

Zweckmäßigerweise hat jede Aussparung 64 zwei bevorzugt rechtwinkelig zueinander verlaufende Randabschnitte 64a, 64b. Jeweils einer dieser Randabschnitte 64a, 64b geht in einen der Führungsschenkel 33, 34 über, der jeweils andere in den zugeordneten Antriebsschenkel 52 beziehungsweise Anschlagschenkel 55. Alle Aussparungen 64 sind sowohl zur zugeordneten Längsseite 37 als auch zur zugeordneten Stirnseite 35 oder 36 des Zentralabschnittes 32 hin offen.

Zweckmäßigerweise schließt sich jeder Trennschlitz 63 an eine der Aussparungen 64 an, wobei die Breite des Trennschlitzes 63 geringer ist als diejenige der zugeordneten Aussparung 64.

Der Anschlagschenkel 55 ist bevorzugt so gestaltet, dass er sich innerhalb der Führungsausnehmung 44 linear bewegen kann.

Der Antriebsschenkel 52 hat zweckmäßigerweise eine in Achsrichtung der Querachse 38 gemessene größte Breite, die größer ist als die Breite des Führungsabschnittes 28. Bevorzugt ist der Antriebsschenkel 52 zumindest annähernd so breit wie das Antriebsgehäuse 7.

In einer vorteilhaften Ausgestaltung, die beim Ausführungsbeispiel realisiert ist, ist der Antriebsschenkel 52 U-förmig gebogen und damit quasi doppelwandig ausgebildet. Entsprechendes gilt beim Ausführungsbeispiel auch für den Anschlagschenkel 55.

Der Antriebsschenkel 52 hat bevorzugt einen ausgehend vom Zentralabschnitt 32 nach unten ragenden ersten Schenkelabschnitt 52a, an den sich mit einer Biegung von 180° ein zurückgebogener und nach oben ragender zweiter Schenkelabschnitt 52b anschließt. Beide Schenkelabschnitte 52a, 52b sind bevorzugt plattenförmig ausgebildet und erstrecken sich zweckmäßigerweise zumindest im Wesentlichen in zueinander parallelen Ebenen, die insbesondere rechtwinkelig zu der Längsachse 27 ausgerichtet sind.

Eine entsprechende Ausgestaltung besitzt zweckmäßigerweise auch der Anschlagschenkel 55, dessen erster und zweiter Schenkelabschnitt mit den Bezugsziffern 55a, 55b bezeichnet sind.

Antriebsschenkel 52 und Anschlagschenkel 55 haben also eine U-förmige Querschnittskontur mit nach oben weisender U-Öffnung.

Bevorzugt ist bei dem Antriebsschenkel 52 und/oder bei dem Anschlagschenkel 55 die Biegeformung so erfolgt, dass der nach unten ragende erste Schenkelabschnitt 52a, 55a einen vom Führungsabschnitt 28 weiter entfernten äußeren Schenkelabschnitt bildet, während der nach oben ragende zweite Schenkelabschnitt 52b, 55b näher beim Führungsabschnitt 28 liegt und einen inneren Schenkelabschnitt bildet, der den äußeren Schenkelabschnitt an der dem Führungsabschnitt 28 zugewandten Innenseite flankiert.

Grundsätzlich wäre es jedoch auch möglich, die Anordnung der Schenkelabschnitte umzukehren, sodass der erste Schenkelabschnitt 52a, 55a einen inneren Schenkelabschnitt und der zweite Schenkelabschnitt 52b, 55b einen äußeren Schenkelabschnitt bildet.

Selbstverständlich ist es auch möglich, einen oder beide der erwähnten Schenkel 52, 55 nur einwandig auszuführen, ohne eine Rückbiegung vorzusehen.

Bei dem Antriebsschenkel 52 ist die doppelwandige Ausführung insbesondere für eine vorteilhafte Gestaltung der Befestigungsschnittstelle 53 zur Befestigung des Antriebsabschnittes 12 verwendbar. Dies ist beim Ausführungsbeispiel realisiert.

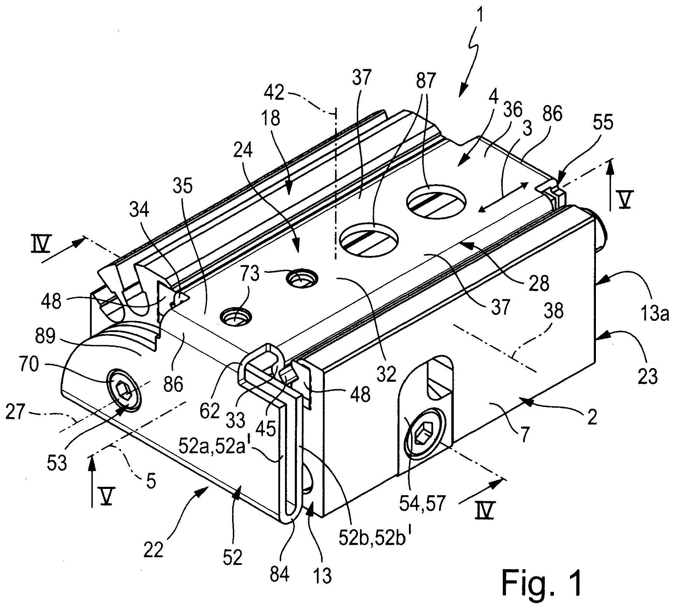

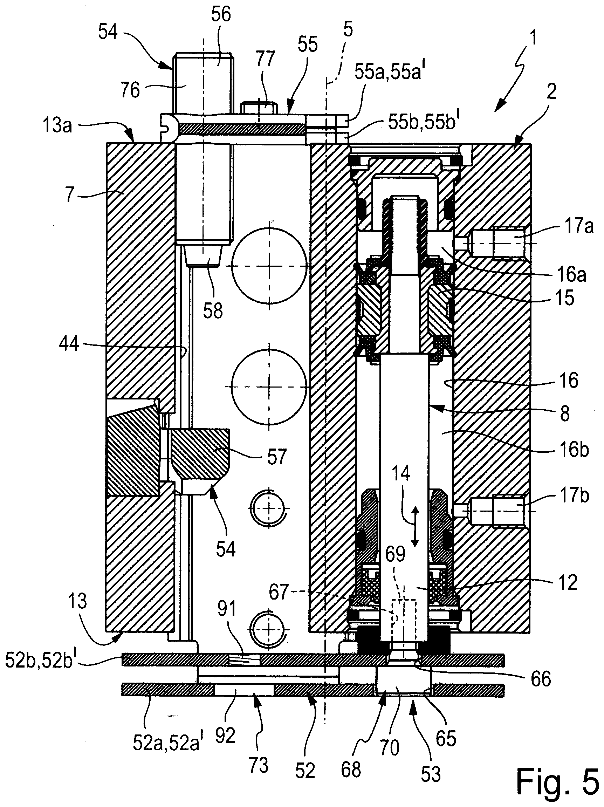

Wie insbesondere die Figuren 1 und 5 deutlich machen, ist der hier vom ersten Schenkelabschnitt 52a gebildete äußere Schenkelabschnitt 52a' von einem ersten Befestigungsloch 65 durchsetzt, das mit einem dazu koaxialen zweiten Befestigungsloch 66 fluchtet, das den beim Ausführungsbeispiel vom zweiten Schenkelabschnitt 52b gebildeten inneren Schenkelabschnitt 52b' durchsetzt. Beide Befestigungslöcher 65, 66 fluchten mit einer stirnseitig in den Antriebsabschnitt 12 eingebrachten Gewindebohrung 67.

Von der Vorderseite des Schlittenkörpers 24 her ist eine Befestigungsschraube 68 in die beiden Befestigungslöcher 65, 66 eingesetzt, die mit ihrem Gewindeschaft 69 das zweite Befestigungsloch 66 durchsetzt und in die Gewindebohrung 67 eingeschraubt ist. Der Schraubenkopf 70 der Befestigungsschraube 68 taucht in das erste Befestigungsloch 65 ein, das ausreichend groß bemessen ist, um den Schraubenkopf 70 aufzunehmen, wobei sein Durchmesser im Wesentlichen dem Kopfdurchmesser des Schraubenkopfes 70 entspricht.

Die Befestigungsschraube 68 ist festgezogen, wobei sich ihr Schraubenkopf 70 außen an dem inneren Schenkelabschnitt 52b' abstützt und diesen mit dem Antriebsabschnitt 12 verspannt. Gleichzeitig kommt der Schraubenkopf 70 im Innern des Antriebsschenkels 52 versenkt zu liegen, da der Abstand zwischen den beiden Schenkelabschnitten 52a', 52b' so gewählt ist, dass der Schraubenkopf 70 nicht über die dem inneren Schenkelabschnitt 52b' entgegengesetzte Außenfläche des äußeren Schenkelabschnittes 52a' hinausragt. Auf diese Weise lässt sich eine glattflächige Außenfläche des Antriebsschenkels 52 realisieren.

Der Schlittenkörper 24 ist mit mindestens einer Montageschnittstelle 73 ausgestattet, die es ermöglicht, einen durch den Abtriebsschlitten 4 zu bewegenden Gegenstand zu befestigen. Solche Montageschnittstellen 73 sind beispielsweise als Gewindelöcher konzipiert. Exemplarisch ist der Schlittenkörper 24 im Bereich des Zentralabschnittes 32 mit mindestens einer solchen Montageschnittstelle 73 ausgestattet. Zusätzlich oder alternativ kann insbesondere auch der Antriebsschenkel 52 mindestens eine solche Montageschnittstelle 73 aufweisen.

Die sich aus zwei Schenkelabschnitten 52a, 52b zusammensetzende doppelwandige Gestaltung des Antriebsschenkels 52 lässt sich besonders vorteilhaft zur Integration mindestens einer Montageschnittstelle 73 nutzen, wie dies nur in Figur 5 exemplarisch eingezeichnet ist. In einem solchen Fall bestehen eine oder mehrere Montageschnittstellen 73 jeweils aus einem in dem inneren Schenkelabschnitt 52b' ausgebildeten Gewindeloch 91 und aus einem hierzu koaxialen, im äußeren Schenkelabschnitt 52a' ausgebildeten, bevorzugt gewindelosen Durchgangsloch 92. Das Durchgangsloch 92 hat zweckmäßigerweise einen größeren Durchmesser als das Gewindeloch 91 und kann als Zentrierloch für die Positionierung eines zu fixierenden Gegenstandes genutzt werden, der in das Durchgangsloch 92 einführbar ist. Mit Hilfe des Gewindeloches 91 kann dieser Gegenstand an dem Antriebsschenkel 52 festgeschraubt werden.

Der zu fixierende Gegenstand kann insbesondere einen Zentrierabschnitt aufweisen, dessen Außendurchmesser dem Innendurchmesser des Durchgangsloches 92 entspricht und an den sich ein Gewindebolzen anschließt, wobei der Gegenstand zu seiner Montage von außen her in das Durchgangsloch 92 eingeführt und mit dem vorauseilenden Gewindebolzen in das Gewindeloch 91 eingeschraubt wird, bis der Zentrierabschnitt in das als Zentrierloch fungierende Durchgangsloch 92 eintaucht und sich zweckmäßigerweise an der dem äußeren Schenkelabschnitt 52a' zugewandten, das Gewindeloch 91 umgebenden Fläche des inneren Schenkelabschnittes 52b' abstützt.

Bei dem Anschlagschenkel 55 wird die doppelwandige, sich aus zwei Schenkelabschnitten 55a, 55b zusammensetzende Gestaltung vorzugsweise dafür genutzt, um eine Lagesicherung des Hubbegrenzungselementes 56 vorzunehmen.

In diesem Zusammenhang sind beide Schenkelabschnitte 55a, 55b von jeweils einem mit einem Innengewinde ausgestatteten Befestigungs-Gewindeloch 74, 75 durchsetzt, wobei diese beiden Befestigungs-Gewindelöcher 74, 75 den gleichen Durchmesser haben und koaxial zueinander ausgerichtet sind. Das Hubbegrenzungselement 56, das zweckmäßigerweise zumindest partiell einen kreiszylindrischen Außenumfang hat, ist mit einem Außengewinde 76 versehen, mit dem es in die beiden Befestigungs-Gewindelöcher 74, 75 derart einschraubbar ist, dass es sich gleichzeitig durch beide Befestigungs-Gewindelöcher 74, 75 hindurch erstreckt.

Durch Verdrehen kann das Hubbegrenzungselement 56 in den beiden Befestigungs-Gewindelöchern 74, 75 axial verstellt werden, um eine gewünschte Hubbegrenzungsposition einzustellen.

Ist die gewünschte Hubbegrenzungsposition erreicht, kann das Hubbegrenzungselement 56 mit dem Anschlagschenkel 55 verspannt werden, sodass sich eine kraftschlüssige Verdrehsicherung ergibt. Dies ist dadurch realisierbar, dass die beiden Schenkelabschnitte 55a, 55b mittels eines Spreizelementes 77 derart auseinanderspreizbar sind, dass die Innengewinde der beiden Befestigungs-Gewindelöcher 74, 75 mit dem Außengewinde 76 des Hubbegrenzungselementes 56 verspannt werden. Die Nutflanken der beiden Innengewinde werden in der axialen Richtung des Hubbegrenzungselementes 56 in einander entgegengesetzten Richtungen mit den Nutflanken des Außengewindes 76 verspannt, sodass eine Reibungskraft erzeugt wird, die ein unerwünschtes Verdrehen des Hubbegrenzungselementes 56 verhindert.

Bevorzugt ist das Spreizelement 77 als Schraube ausgebildet, was beim Ausführungsbeispiel der Fall ist. Diese aufgrund ihrer Funktion als Spreizschraube 78 bezeichnete Schraube ist in von axial außen her zugänglicher Weise in ein weiteres Gewindeloch 79 eingeschraubt, das in den äußeren Schenkelabschnitt 55a' des Anschlagschenkels 55 eingeschraubt ist, der bevorzugt von dem ersten Schenkelabschnitt 55a gebildet ist. Diesem weiteren Gewindeloch 79 liegt ein Flächenabschnitt 83 des benachbarten inneren Schenkelabschnittes 55b' des Anschlagschenkel 55 gegenüber, der bevorzugt von dem zweiten Schenkelabschnitt 55b gebildet ist. Die Spreizschraube 78 kann durch Verdrehen relativ zu dem äußeren Schenkelabschnitt 55a' in Richtung zum inneren Schenkelabschnitt 55b' verschraubt werden, wobei sie die beiden Schenkelabschnitte 55a', 55b' voneinander weg gerichtet beaufschlagt, woraus das geschilderte Auseinanderspreizen und das gegenseitige Verspannen der Gewinde der Befestigungs-Gewindelöcher 74, 75 und des Hubbegrenzungselementes 56 hervorrufbar ist.

Zweckmäßigerweise sind die beiden Schenkelabschnitte 52a, 52b; 55a, 55b des Antriebsschenkels 52 und/oder des Anschlagschenkels 55 mit einem Abstand zueinander angeordnet, sodass sich dazwischen ein spaltförmiger Zwischenraum erstreckt. Um dies zu erreichen, genügt es, den betreffenden Schenkel 52, 55 in einem Rückbiegebereich 84 derart um 180° umzubiegen, dass der Rückbiegebereich 84 U-förmig abgerundet gekrümmt ist. Ein anschließendes Zusammendrücken der sich flankierenden Schenkelabschnitte 52a, 52b; 55a, 55b, das prinzipiell möglich wäre, ist nicht erforderlich.

Zweckmäßigerweise schließt sich der Antriebsschenkel 52 und/oder der Anschlagschenkel 55 mit einem Schenkel-Basisabschnitt 85, der eine geringere Breite als der Zentralabschnitt 32 hat, an diesen Zentralabschnitt 32 an. Der zum Erhalt des abgebogenen Antriebsschenkels 52 und/oder Anschlagschenkels 55 unmittelbar einem Biegevorgang ausgesetzte Verformungsabschnitt 86 ist zweckmäßigerweise ein Bestandteil des Schenkel-Basisabschnittes 85. Zweckmäßigerweise schließt sich an den Schenkel-Basisabschnitt 85 des Antriebsschenkels 52 und/oder des Anschlagschenkels 55 ein diesbezüglich in Achsrichtung der Querachse 38 breiterer Schenkel-Hauptabschnitt 89 an, der die beiden jeweils bevorzugt vorhandenen Schenkelabschnitte 52a, 52b; 55a, 55b aufweist.

Bei einem bevorzugten Verfahren zur Herstellung des Linearantriebes 1 wird der Schlittenkörper 24 ausgehend von einem plattenförmigen Blechteilrohling 25 in die gewünschte Form gebogen. Die Montageschnittstellen 73 werden zweckmäßigerweise vor diesem Biegevorgang erzeugt, beispielsweise durch Stanzen und anschließendes Einschneiden eines Gewindes. Im gleichen Zusammenhang können bei Bedarf weitere Löcher 87 eingestanzt werden, die den Zentralabschnitt 32 durchsetzen und den Zugang zu Befestigungslöchern 88 ermöglichen, die das Antriebsgehäuse 7 in dem unterhalb des Zentralabschnittes 32 liegenden Bereich durchsetzen.

Der Blechteilrohling 25 ist randseitig, also an seiner Außenkontur, so zugeschnitten oder auf andere Weise randseitig derart konturiert, dass das den Schlittenkörper 24 bildende Blechbiegeteil nach der Biegeumformung keiner weiteren randseitigen Zuschnittsarbeiten bedarf. Der Blechteilrohling 25 kann also praktisch unmittelbar ein Biegezuschnitt sein, aus dem durch anschließendes ausschließliches Biegeumformen der Schlittenkörper 24 biegbar ist. Bei dieser Biegeumformung werden die laschenartig abstehenden Abschnitte 52a, 33a, 34a, 55a umgebogen und in die gewünschte Form gebogen. Die beiden Abschnitte 52a, 55a, aus denen der Antriebsschenkel 52 und der Anschlagschenkel 55 resultieren, werden zweckmäßigerweise zum Erhalt der beiden Schenkelabschnitte 52a, 52b; 55a, 55b in dem Rückbiegebereich 84 um 180° in sich gebogen, bevor anschließend das Nach-unten-Biegen des gesamten Antriebsschenkels 52 beziehungsweise Anschlagschenkels 55 vorgenommen wird.

## Patentansprüche

1. Linearantrieb, mit einer ein Antriebsgehäuse (7) aufweisenden Antriebseinheit (2) und einem außen an dem Antriebsgehäuse (7) angeordneten und diesbezüglich zur Ausführung einer in der Achsrichtung einer Längsachse (5) orientierten Hubbewegung (3) linear verschiebbar geführten Abtriebsschlitten (4), wobei der Abtriebsschlitten (4) über einen einstückigen Schlittenkörper (24) verfügt, der einen im Querschnitt U-förmigen Führungsabschnitt (28) bestehend aus einem plattenförmigen Zentralabschnitt (32) und an entgegengesetzten Längsseiten (37) daran angeordneten, in Richtung zum Antriebsgehäuse (7) nach unten ragenden Führungsschenkeln (33, 34) sowie einen an einer Stirnseite (35) des Zentralabschnittes (32) angeordneten und ebenfalls nach unten ragenden Antriebsschenkel (52) aufweist, wobei die Führungsschenkel (33, 34) zur Linearführung des Abtriebsschlittens (4) dienen und der Antriebsschenkel (52) mit mindestens einem aus dem Antriebsgehäuse (7) herausragenden Antriebsabschnitt (12) der Antriebseinheit (2) antriebsmäßig gekoppelt ist, **dadurch gekennzeichnet, dass** der einstückige Schlittenkörper (24) ein metallisches Blechbiegeteil ist, wobei sowohl die Führungsschenkel (33, 34) als auch der Antriebsschenkel (52) von bezüglich des Zentralabschnittes (32) umgebogenen Abschnitten (33a, 34a, 52a) des Schlittenkörpers (24) gebildet sind.

2. Linearantrieb nach Anspruch 1, **dadurch gekennzeichnet, dass** die beiden Führungsschenkel (33, 34) jeweils mindestens eine sich in Achsrichtung der Längsachse (5) erstreckende lineare Führungsnut (45) aufweisen, in die mindestens ein den Abtriebsschlitten (4) bezüglich des Antriebsgehäuses (7) quer zu der Längsachse (5) abstützendes, bevorzugt als Wälzelement ausgebildetes Führungselement (46) eingreift, wobei zweckmäßigerweise zeitgleich mehrere Führungselemente (46) in die Führungsnut (45) eingreifen.

3. Linearantrieb nach Anspruch 2, **dadurch gekennzeichnet, dass** die beiden Führungsschenkel (33, 34) unmittelbar in sich derart gebogen sind, dass sie eine die jeweils zugeordnete mindestens eine Führungsnut (45) bildende Querschnittkontur haben.

4. Linearantrieb nach Anspruch 2 oder 3, **dadurch gekennzeichnet, dass** die mindestens eine Führungsnut (45) an der vom jeweils anderen Führungsschenkel (34, 33) abgewandten Außenseite des betreffenden Führungsschenkels (33, 34) angeordnet ist.

5. Linearantrieb nach einem der Ansprüche 1 bis 4, **dadurch gekennzeichnet, dass** der Antriebsschenkel (52) von jedem Führungsschenkel (33, 34) durch einen an der dem Zentralabschnitt (32) entgegengesetzten Unterseite offenen Trennschlitz (63) getrennt ist, der zweckmäßigerweise so gestaltet ist, dass sich zwischen dem Antriebsschenkel (52) und jedem Führungsschenkel (33, 34) ein Freiraum erstreckt, und/oder dass der Zentralabschnitt (32) in seinen beiden Eckbereichen, in denen der Antriebsschenkel (52) zu den beiden Führungsschenkeln (33, 34) benachbart ist, jeweils eine nach Art einer Ausklinkung gestaltete Aussparung (64) aufweist.

6. Linearantrieb nach einem der Ansprüche 1 bis 5, **dadurch gekennzeichnet, dass** der Antriebsschenkel (52) in sich U-förmig gebogen ist und einen ausgehend vom Zentralabschnitt (32) nach unten ragenden ersten Schenkelabschnitt (52a) aufweist, an den sich ein um etwa 180° zurückgebogener und nach oben ragender zweiter Schenkelabschnitt (52b) anschließt, wobei zweckmäßigerweise der zweite Schenkelabschnitt (52b) den ersten Schenkelabschnitt (52a) an dessen dem Führungsabschnitt (28) zugewandter Innenseite flankiert.

7. Linearantrieb nach Anspruch 6, **dadurch gekennzeichnet, dass** die beiden Schenkelabschnitte (52a, 52b) des Antriebsschenkels (52) jeweils von einem Befestigungsloch (65, 66) durchsetzt sind, wobei diese Befestigungslöcher (65, 66) koaxial zueinander ausgerichtet sind und das in dem weiter vom Führungsabschnitt (28) entfernten äußeren Schenkelabschnitt (52a') der beiden Schenkelabschnitte (52a, 52b) ausgebildete äußere Befestigungsloch (65) einen größeren Durchmesser hat als das in dem vom anderen der beiden Schenkelabschnitte (52a, 52b) gebildeten inneren Schenkelabschnitt (52b') ausgebildete innere Befestigungsloch (66), wobei das innere Befestigungsloch (66) vom Gewindeschaft (69) einer Befestigungsschraube (68) durchsetzt ist, durch die der Antriebsschenkel (52) mit dem Antriebsabschnitt (12) verschraubt ist und deren Schraubenkopf (70) in das äußere Befestigungsloch (65) eintaucht, wobei der Abstand zwischen den beiden Schenkelabschnitten (52a, 52b) zweckmäßigerweise so ausgestaltet ist, dass der Schraubenkopf (70) nicht über die dem inneren Schenkelabschnitt (52b') entgegengesetzte Außenfläche des äußeren Schenkelabschnittes (52a') hinausragt.

8. Linearantrieb nach einem der Ansprüche 1 bis 7, **dadurch gekennzeichnet, dass** der einstückige Schlittenkörper (24) an der dem Antriebsschenkel (52) entgegengesetzten Stirnseite (36) des Zentralabschnittes (32) einen ebenfalls nach unten ragenden Anschlagschenkel (55) aufweist, der von einem bezüglich des Zentralabschnittes (32) umgebogenen Abschnitt (55a) des Schlittenkörpers (24) gebildet ist und der zur Hubbegrenzung des Abtriebsschlittens (4) verwendbar ist.

9. Linearantrieb nach Anspruch 8, **dadurch gekennzeichnet, dass** der Anschlagschenkel (55) von jedem Führungsschenkel (33, 34) durch einen an der dem Zentralabschnitt (32) entgegengesetzten Unterseite offenen Trennschlitz (63) getrennt ist, der zweckmäßigerweise so gestaltet ist, dass sich zwischen dem Anschlagschenkel (55) und jedem Führungsschenkel (33, 34) ein Freiraum erstreckt.

10. Linearantrieb nach Anspruch 8 oder 9, **dadurch gekennzeichnet, dass** der Zentralabschnitt (32) in seinen beiden Eckbereichen, in denen der Anschlagschenkel (55) zu den beiden Führungsschenkeln (33, 34) benachbart ist, eine nach Art einer Ausklinkung gestaltete Aussparung (64) aufweist.

11. Linearantrieb nach einem der Ansprüche 8 bis 10, **dadurch gekennzeichnet, dass** der Anschlagschenkel(55) ein Hubbegrenzungselement (56) trägt, das zur Hubbegrenzung des Abtriebsschlittens (4) mit einem an dem Antriebsgehäuse (7) angeordneten Gegenanschlag (57) zusammenwirken kann und das zweckmäßigerweise über Aufpralldämpfungsmittel (58) verfügt.

12. Linearantrieb nach einem der Ansprüche 8 bis 11, **dadurch gekennzeichnet, dass** der Anschlagschenkel (55) in sich U-förmig gebogen ist und einen ausgehend vom Zentralabschnitt (32) nach unten ragenden ersten Schenkelabschnitt (55a) aufweist, an den sich ein um etwa 180° zurückgebogener und nach oben ragender zweiter Schenkelabschnitt (55b) anschließt, wobei zweckmäßigerweise der zweite Schenkelabschnitt (55b) den ersten Schenkelabschnitt (55a) an dessen dem Führungsabschnitt (28) zugewandter Innenseite flankiert.

13. Linearantrieb nach Anspruch 12, **dadurch gekennzeichnet, dass** die beiden Schenkelabschnitte (55a, 55b) des Anschlagschenkels (55) jeweils von einem ein Innengewinde aufweisenden Befestigungs-Gewindeloch (74, 75) durchsetzt sind, wobei diese Befestigungs-Gewindelöcher (74, 75) koaxial zueinander ausgerichtet sind und in diese Befestigungs-Gewindelöcher (74, 75) ein zur Hubbegrenzung des Abtriebsschlittens (4) dienendes Hubbegrenzungselement (56) mit einem Außengewinde (76) so eingeschraubt oder einschraubbar ist, dass es zugleich beide Befestigungs-Gewindelöcher (74, 75) durchsetzt, und wobei der Linearantrieb (1) ein Spreizelement (77) aufweist, durch das die beiden Schenkelabschnitte (55a, 55b) des Anschlagschenkels (55) derart auseinanderspreizbar sind, dass die Innengewinde der Befestigungs-Gewindelöcher (74, 75) zur Verdrehsicherung des Hubbegrenzungselementes (56) mit dem Außengewinde (76) des Hubbegrenzungselementes (56) verspannt sind.

14. Linearantrieb nach Anspruch 13, **dadurch gekennzeichnet, dass** das Spreizelement (77) eine Spreizschraube (78) ist, die in ein bezüglich den Befestigungs-Gewindelöchern (74, 75) gesondertes Gewindeloch (79) des einen Schenkelabschnittes (55a) einschraubbar und mit einem gegenüberliegenden Flächenabschnitt (83) des anderen Schenkelabschnittes (55b) verspannbar ist, um die beiden Schenkelabschnitte (55a, 55b) auseinanderzuspreizen, und/oder dass der Schlittenkörper (24) aus einem Stahlblech besteht.

15. Verfahren zur Herstellung eines Linearantriebes (1), der eine ein Antriebsgehäuse (7) aufweisende Antriebseinheit (2) und einen außen an dem Antriebsgehäuse (7) angeordneten und diesbezüglich zur Ausführung einer in der Achsrichtung einer Längsachse (5) orientierten Hubbewegung (3) linear verschiebbar geführten Abtriebsschlitten (4) umfasst, wobei der Abtriebsschlitten (4) über einen einstückigen Schlittenkörper (24) verfügt, der einen im Querschnitt U-förmigen Führungsabschnitt (28) bestehend aus einem plattenförmigen Zentralabschnitt (32) und an entgegengesetzten Längsseiten (37) daran angeordneten, in Richtung zum Antriebsgehäuse (7) nach unten ragenden Führungsschenkeln (33, 34) sowie einen an einer Stirnseite (35) des Zentralabschnittes (32) angeordneten und ebenfalls nach unten ragenden Antriebsschenkel (52) aufweist, wobei die Führungsschenkel (33, 34) zur Linearführung des Abtriebsschlittens (4) dienen und der Antriebsschenkel (52) mit mindestens einem aus dem Antriebsgehäuse (7) herausragenden Antriebsabschnitt (12) der Antriebseinheit (2) antriebsmäßig gekoppelt ist, **dadurch gekennzeichnet, dass** der einstückige Schlittenkörper (24) auf der Grundlage eines zuvor randseitig entsprechend konturierten plattenförmigen Blechteilrohlings (25) durch Biegeumformung als metallisches Blechbiegeteil hergestellt wird.

## Claims

1. Linear drive with a drive unit (2) which has a drive housing (7), and an output slide (4) mounted on the outside of the drive housing (7) and in this respect guided with linear movement capability to execute a stroke movement (3) oriented in the axial direction of a longitudinal axis (5), wherein the output slide (4) has a one-piece slide body (24) which has a guide section (28), U-shaped in cross-section, comprised of a plate-shaped central section (32) and guide legs (33, 34) fitted to opposite long sides (37) of the former and extending downwards towards the drive housing (7), together with a driving leg (52) arranged on an end face (35) of the central section (32) and likewise extending downwards, wherein the guide legs (33, 34) serve for linear guidance of the output slide (4) and the driving leg (52) is connected for driving purposes to at least one drive section (12) of the drive unit (2) extending out of the drive housing (7), **characterised in that** the one-piece slide body (24) is a bent sheet metal part, wherein both the guide legs (33, 34) and also the driving leg (52) are formed by sections (33a, 34a, 52a) of the slide body (24) bent around relative to the central section (32).

2. Linear drive according to claim 1, **characterised in that** the two guide legs (33, 34) each has a linear guide slot (45) extending in the axial direction of the longitudinal axis (5), in which engages at least one guide element (46), preferably in the form of a roller element and supporting the output slide (4) relative to the drive housing (7), transversely to the longitudinal axis (5), wherein expediently several guide elements (46) engage in the guide slot (45) simultaneously.

3. Linear drive according to claim 2, **characterised in that** the two guide legs (33, 34) are bent directly in such a way that they have a cross-sectional contour forming the respectively assigned guide slot or slots (45).

4. Linear drive according to claim 2 or 3, **characterised in that** the guide slot or slots (45) is or are provided on the outside of the relevant guide leg (33, 34) facing away from the other respective guide leg (34, 33).

5. Linear drive according to any of claims 1 to 4, **characterised in that** the driving leg (52) is separated from each guide leg (33, 34) by a dividing slot (63) which is open on the underside opposite the central section (32) an is expediently so designed that a free space extends between the driving leg (52) and each guide leg (33, 34), and/or that the central section (32), in its two comer zones in which the driving leg (52) is adjacent to the two guide legs (33, 34), in each case has a recess (64) in the manner of a notch.

6. Linear drive according to any of claims 1 to 5, **characterised in that** the driving leg (52) is bent into a U-shape and has a first leg section (52a) extending downwards from the central section (32) and adjoined by a second leg section (52b) extending upwards and bent back by around 180°, wherein expediently the second leg section (52b) flanks the first leg section (52a) on its inner side which faces the guide section (28).

7. Linear drive according to claim 6, **characterised in that** a mounting hole (65, 66) passes through each of the two leg sections (52a, 52b) of the driving leg (52), wherein these mounting holes (65, 66) are aligned coaxial to one another and the outer mounting hole (65) formed in the outer leg section (52a') of the two leg sections (52a, 52b) situated further from the guide section (28) has a greater diameter than the inner mounting hole (66) made in the inner leg section (52b') formed by the other of the two leg sections (52a, 52b), wherein there passes through the inner mounting hole (66) the threaded shank (69) of a mounting bolt (68), by which the driving leg (52) is bolted to the drive section (12) and its bolt head (70) dips into the outer mounting hole (65), wherein the distance between the two leg sections (52a, 52b) is expediently so designed that the bolt head (70) does not extend beyond the outer surface of the outer leg section (52a') opposite the inner leg section (52b').

8. Linear drive according to any of claims 1 to 7, **characterised in that** the one-piece slide body (24) on the end face (36) of the central section (32) opposite the driving leg (52) has a similarly downwards extending stop leg (55) which is formed by a section (55a) of the slide body (24) bent relative to the central section (32) and which may be used for travel limitation of the output slide (4).

9. Linear drive according to claim 8, **characterised in that** the stop leg (55) is separated from each guide leg (33, 34) by a dividing slot (63) which is open at the underside opposite the central section (32) and is expediently so designed that a free space extends between the stop leg (55) and each guide leg (33, 34).

10. Linear drive according to claim 8 or 9, **characterised in that** the central section (32), in its two corner zones in which the stop leg (55) is adjacent to the two guide legs (33, 34), in each case has a recess (64) in the manner of a notch.

11. Linear drive according to any of claims 8 to 10, **characterised in that** the stop leg (55) carries a travel limiting element (56) which is able to interact with a counter-stop (57) fitted to the drive housing (7) to limit the travel of the output slide (4), and which expediently has impact damping means (58).

12. Linear drive according to any of claims 8 to 11, **characterised in that** the stop leg (55) is bent into a U-shape and has a first leg section (55a) extending downwards from the central section (32) and adjoined by a second leg section (55b) extending upwards and bent back by around 180°, wherein expediently the second leg section (55b) flanks the first leg section (55a) on its inner side which faces the guide section (28).

13. Linear drive according to claim 12, **characterised in that** a tapped mounting hole (74, 75) with an internal thread passes through each of the two leg sections (55a, 55b) of the stop leg (55), wherein these tapped mounting holes (74, 75) are aligned coaxial to one another and in these tapped mounting holes (74, 75) a travel limiting element (56) with an external thread (76) serving for travel limitation of the output slide (4) is or may be screwed so that it passes through both tapped mounting holes (74, 75) at the same time, and wherein the linear drive (1) has a spreader element (77), by means of which the two leg sections (55a, 55b) of the stop leg (55) may be spread out in such a way that the internal thread of the tapped mounting holes (74, 75) is braced against the external thread (76) of the travel limiting element (56) for antitwist locking of the travel limiting element (56).

14. Linear drive according to claim 13, **characterised in that** the spreader element (77) is a spreader bolt (78) which may be screwed into a tapped hole (79) of the one leg section (55a) which is separate from the tapped mounting holes (74, 75), and may be braced against an opposite surface section (83) of the other leg section (55b), in order to spread the two leg sections (55a, 55b) apart, and/or that the slide body (24) is made of a steel plate.

15. Method of manufacturing a linear drive (1), which has a drive unit (2) with a drive housing (7), and an output slide (4) mounted on the outside of the drive housing (7) and in this respect guided with linear movement capability to execute a stroke movement (3) oriented in the axial direction of a longitudinal axis (5), wherein the output slide (4) has a one-piece slide body (24) which has a guide section (28), U-shaped in cross-section, comprised of a plate-shaped central section (32) and guide legs (33, 34) fitted to opposite long sides (37) of the former and extending downwards towards the drive housing (7), together with a driving leg (52) arranged on an end face (35) of the central section (32) and likewise extending downwards, wherein the guide legs (33, 34) serve for linear guidance of the output slide (4) and the driving leg (52) is connected for driving purposes to at least one drive section (12) of the drive unit (2) extending out of the drive housing (7), **characterised in that** the one-piece slide body (24) is manufactured as a bent sheet metal part based on a plate-shaped unworked sheet metal part (25), suitably contoured at the edge in advance, through bend forming.

## Revendications

1. Entraînement linéaire, comprenant une unité d'entraînement (2) présentant un boîtier d'entraînement (7) et un chariot de sortie (4) disposé côté extérieur au niveau du boîtier d'entraînement (7) et guidé de manière à pouvoir être déplacé par un coulissement linéaire par rapport à ce dernier afin d'exécuter un déplacement de course (3) orienté dans la direction axiale d'un axe longitudinal (5), dans lequel le chariot de sortie (4) dispose d'un corps de chariot (24) d'un seul tenant, qui présente une section de guidage (28) en forme de U dans la section transversale, constituée d'une section centrale (32) en forme de panneau et de branches de guidage (33, 34) disposées sur cette dernière au niveau de côtés longitudinaux (37) opposés, dépassant vers le bas en direction du boîtier d'entraînement (7), et une branche d'entraînement (52) disposée au niveau d'un côté frontal (35) de la section centrale (32) et dépassant également vers le bas, dans lequel les branches de guidage (33, 34) servent au guidage linéaire du chariot de sortie (4) et la branche d'entraînement (52) est couplée à au moins une section d'entraînement (12) dépassant hors du boîtier d'entraînement (7) de l'unité d'entraînement (2) de manière à pouvoir être entrainée par la section d'entraînement (12), **caractérisé en ce que** le corps de chariot (24) d'un seul tenant est une pièce cintrée en tôle métallique, dans lequel aussi bien les branches de guidage (33, 34) que la branche d'entraînement (52) sont formées par des sections (33a, 34a, 52a), repliées par rapport à la section centrale (32), du corps de chariot (24).

2. Entraînement linéaire selon la revendication 1, **caractérisé en ce que** les deux branches de guidage (33, 34) présentent respectivement au moins une rainure de guidage (45) linéaire s'étendant dans la direction axiale de l'axe longitudinal (5), avec laquelle au moins un élément de guidage (46) soutenant le chariot de sortie (4) par rapport au boîtier d'entraînement (7) de manière transversale par rapport à l'axe longitudinal (5), préférentiellement réalisé sous la forme d'un élément de roulement venant en prise, dans lequel plusieurs éléments de guidage (46) viennent en prise de manière simultanée avec la rainure de guidage (45) de manière appropriée.

3. Entraînement linéaire selon la revendication 2, **caractérisé en ce que** les deux branches de guidage (33, 34) sont cintrées immédiatement sur elles de telle manière que la section transversale présente un contour respectivement associé formant au moins une rainure de guidage (45).

4. Entraînement linéaire selon l'une des revendications 2 ou 3, **caractérisé en ce que** l'une au moins des rainures de guidage (45) est disposée au niveau du côté extérieur, orienté de manière opposée respectivement par rapport à l'autre branche de guidage (34, 33), de la branche de guidage (33, 34) concernée.

5. Entraînement linéaire selon l'une quelconque des revendications 1 à 4, **caractérisé en ce que** la branche d'entraînement (52) est séparée de chaque branche de guidage (33, 34) par une entaille de séparation (63) ouverte au niveau du côté inférieur opposé à la section centrale (32), laquelle est configurée de manière appropriée de telle sorte qu'un espace dégagé s'étend entre la branche d'entraînement (52) et chaque branche de guidage (33, 34), et/ou **en ce que** la section centrale (32) présente dans ses deux zones d'angle, dans lesquelles la branche d'entraînement (52) est adjacente aux deux branches de guidage (33, 34), respectivement un évidement (64) configuré à la manière d'une encoche.

6. Entraînement linéaire selon l'une quelconque des revendications 1 à 5, **caractérisé en ce que** la branche d'entraînement (52) est cintrée sur elle-même en forme de U et présente une première section de branche (52a) dépassant vers le bas en partant de la section centrale (32), à laquelle se raccorde une deuxième section de branche (52b) repliée d'environ 180° et dépassant vers le haut, dans lequel la deuxième section de branche (52b) encadre de manière appropriée la première section de branche (52a) au niveau de son côté intérieur tourné vers la section de guidage (28).

7. Entraînement linéaire selon la revendication 6, **caractérisé en ce que** les deux sections de branche (52a, 52b) de la branche d'entraînement (52) sont traversées respectivement par un trou de fixation (65, 66), dans lequel lesdits trous de fixation (65, 66) sont orientés l'un par rapport à l'autre de manière coaxiale et le trou de fixation (65) extérieur réalisé dans la section de branche (52a') extérieure des deux sections de branche (52a, 52b) qui est davantage éloignée de la section de guidage (28), a un diamètre plus grand que le trou de fixation (66) intérieur réalisé dans la section de branche (52b') intérieure formée par l'autre des deux sections de branche (52a, 52b), dans lequel le trou de fixation (66) intérieur est traversé par la tige filetée (69) d'une vis de fixation (68), par laquelle la branche d'entraînement (52) est vissée à la section d'entraînement (12) et dont la tête de vis (70) s'enfonce dans le trou de fixation (65) extérieur, dans lequel la distance entre les deux sections de branche (52a, 52b) est configurée de manière appropriée de telle sorte que la tête de vis (70) ne dépasse pas de la surface extérieure, opposée à la section de branche (52b') intérieure, de la section de branche (52a') extérieure.

8. Entraînement linéaire selon l'une quelconque des revendications 1 à 7, **caractérisé en ce que** le corps de chariot (24) d'un seul tenant présente, au niveau du côté frontal (36) de la section centrale (32), opposé à la branche d'entraînement (52), une branche de butée (55) dépassant également vers le bas, laquelle est formée par une section (55a) repliée par rapport à la section centrale (32), du corps de chariot (24) et qui peut être employée afin de délimiter la course du chariot de sortie (4).

9. Entraînement linéaire selon la revendication 8, **caractérisé en ce que** la branche de butée (55) est séparée de chaque branche de guidage (33, 34) par une entaille de séparation (63) ouverte au niveau du côté inférieur opposé à la section centrale (32), laquelle est configurée de manière appropriée de telle sorte qu'un espace dégagé s'étende entre la branche de butée (55) et chaque branche de guidage (33, 34).

10. Entraînement linéaire selon l'une des revendications 8 ou 9, **caractérisé en ce que** la section centrale (32) présente, dans ses deux zones d'angle, dans lesquelles la branche de butée (55) est adjacente aux deux branches de guidage (33, 34), un évidement (64) configuré à la manière d'une encoche.

11. Entraînement linéaire selon l'une quelconque des revendications 8 à 10, **caractérisé en ce que** la branche de butée (55) supporte un élément de limitation de course (56), qui peut coopérer avec une contre-butée (57) disposée au niveau du boîtier d'entraînement (7) afin de limiter la course du chariot de sortie (4) et qui dispose de manière appropriée de moyens d'amortissement de chocs (58).

12. Entraînement linéaire selon l'une quelconque des revendications 8 à 11, **caractérisé en ce que** la branche de butée (55) est cintrée sur elle-même en forme de U et présente une première section de branche (55a) dépassant vers le bas en partant de la section transversale (32), à laquelle se raccorde une deuxième section de branche (55b) repliée d'environ 180° et dépassant vers le haut, dans lequel la deuxième section de branche (55b) encadre de manière appropriée la première section de branche (55a) au niveau du côté intérieur de cette dernière tourné vers la section de guidage (28).

13. Entraînement linéaire selon la revendication 12, **caractérisé en ce que** les deux sections de branche (55a, 55b) de la branche de butée (55) sont traversées respectivement par un trou fileté de fixation (74, 75) présentant un filetage intérieur, dans lequel lesdits trous filetés de fixation (74, 75) sont orientés l'un par rapport à l'autre de manière coaxiale et un élément de limitation de course (56), servant à limiter la course du chariot de sortie (4), pourvu d'un filetage extérieur (76) est vissé ou peut être vissé dans lesdits trous filetés de fixation (74, 75) de telle sorte qu'il traverse dans le même temps les deux trous filetés de fixation (74, 75) et dans lequel l'entraînement linéaire (1) présente un élément d'écartement (77), par lequel les deux sections de branche (55a, 55b) de la branche de butée (55) peuvent être écartées l'une de l'autre de telle manière que les filetages intérieurs des trous filetés de fixation (74, 75) sont assemblés par serrage au filetage extérieur (76) de l'élément de limitation de course (56) afin d'empêcher la rotation de l'élément de limitation de course (56).

14. Entraînement linéaire selon la revendication 13, **caractérisé en ce que** l'élément d'écartement (77) est une vis d'écartement (78), qui peut être vissée dans un trou fileté (79) séparé par rapport aux trous filetés de fixation (74, 75) de l'une (55a) des sections de branche et qui peut être assemblée par serrage à une section de surface (83) faisant face de l'autre section de branche (55b) afin d'écarter les deux sections de branche (55a, 55b), et/ou **en ce que** le corps de chariot (24) est constitué d'une tôle d'acier.

15. Procédé servant à fabriquer un entraînement linéaire (1), qui comprend une unité d'entraînement (2) présentant un boîtier d'entraînement (7) et un chariot de sortie (4) disposé côté extérieur au niveau du boîtier d'entraînement (7) et guidé de manière à pouvoir être déplacé par un coulissement linéaire, par rapport à ce dernier, afin d'exécuter un déplacement de course (3) orienté dans la direction axiale d'un axe longitudinal (5), dans lequel le chariot de sortie (4) dispose d'un corps de chariot (24) d'un seul tenant, qui présente une section de guidage (28) en forme de U dans la section transversale, constituée d'une section centrale (32) en forme de plaque et de branches de guidage (33, 34) disposées au niveau de côtés longitudinaux (37) opposés, dépassant vers le bas en direction du boîtier d'entraînement (7), ainsi qu'une branche d'entraînement (52) disposée au niveau d'un côté frontal (35) de la section central (32) et dépassant également vers le bas, dans lequel la branche de guidage (33, 34) sert au guidage linéaire du chariot de sortie (4) et la branche d'entraînement (52) est couplée à au moins une section d'entraînement (12) de sorte à pouvoir être entrainée par la section d'entraînement (12), dépassant hors du boîtier d'entraînement (7), de l'unité d'entraînement (2), **caractérisé en ce que** le corps de chariot (24) d'un seul tenant est fabriqué sur la base d'une ébauche en pièce de tôle (25) en forme de plaque contourée de manière correspondante côté bord par mise en forme par cintrage en tant que pièce de cintrage en tôle métallique.
